(19) Europäisches Patentamt
European Patent Office
Office européen des brevets

(11) EP 1 606 337 B1

(12) EUROPÄISCHE PATENTSCHRIFT

(45) Veröffentlichungstag und Bekanntmachung des Hinweises auf die Patenterteilung:
**28.05.2008 Patentblatt 2008/22**

(21) Anmeldenummer: **04711991.2**

(22) Anmeldetag: **18.02.2004**

(51) Int Cl.:
***C08J 3/00*** *(2006.01)*

(86) Internationale Anmeldenummer:
**PCT/EP2004/001538**

(87) Internationale Veröffentlichungsnummer:
**WO 2004/081095 (23.09.2004 Gazette 2004/39)**

# (54) ELEKTRISCH ERWÄRMBARE HAFTKLEBEMASSE

ELECTRICALLY HEATABLE PRESSURE-SENSITIVE ADHESIVE COMPOUND

MASSE ADHESIVE POUVANT ETRE CHAUFFEE ELECTRIQUEMENT

(84) Benannte Vertragsstaaten:
**DE ES FR GB IT**

(30) Priorität: **10.03.2003 DE 10310722**

(43) Veröffentlichungstag der Anmeldung:
**21.12.2005 Patentblatt 2005/51**

(73) Patentinhaber: **tesa AG**
**20253 Hamburg (DE)**

(72) Erfinder:
- **HUSEMANN, Marc**
**22605 Hamburg (DE)**
- **ZÖLLNER, Stephan**
**22043 Hamburg (DE)**
- **WESTPHAL, Andreas**
**22049 Hamburg (DE)**

(74) Vertreter: **Stubbe, Andreas**
**tesa AG,**
**Kst. 9500 - Bf. 645,**
**Quickbornstrasse 24**
**20253 Hamburg (DE)**

(56) Entgegenhaltungen:
**EP-A- 0 942 059**
**DE-A- 10 210 661**
**DE-A- 19 954 960**

- **PATENT ABSTRACTS OF JAPAN vol. 2000, no. 24, 11 May 2001 (2001-05-11) & JP 2001 207143 A (TOMOEGAWA PAPER CO LTD), 31 July 2001 (2001-07-31)**

EP 1 606 337 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine durch elektrischen Strom erwärmbare Haftklebemasse, ein Verfahren zu ihrer Herstellung sowie ihre Verwendung.

In der Automobilindustrie werden vermehrt elektrisch heizbare Außenspiegel eingesetzt. Auch sind Sitzheizungen immer mehr verbreitet. Um bei derartigen Anwendungen die gewünschte Beheizung zu erreichen, werden im einfachsten Fall Kupferdrähte planar verlegt. In den letzten Jahren hat sich die Verwendung so genannter PTC-Elemente (PTC für "positive temperature coefficient") durchgesetzt. So werden etwa für Automobilaußenspiegel beispielsweise mit Aluminium kontaktiertierte PTC-Elemente verklebt. Durch Anlegen einer bestimmten Stromstärke heizt sich das PTC-Element auf und die Wärme wird über ein doppelseitiges Haftklebeband auf die Glasoberfläche des Spiegels übertragen. Auf diese Weise lassen sich Temperaturen von 45 bis 60 °C auf der Oberfläche erzielen. Neben einer möglicht hohen thermischen Leitfähigkeit werden an das Haftklebeband noch besondere Anforderungen im Hinblick auf Wärmescherfestigkeit bei erhöhten Temperaturen, Witterungsbeständigkeit und Haftklebrigkeit bei tiefen Temperaturen gestellt.

Das bestehende Konzept funktioniert gut, erfordert aber einen relativ komplizierten Aufbau, da die PTC-Elemente nicht nur mit dem Glas des Spiegels verklebt werden müssen, sondern auch mit der Trägerplatte des Spiegels, die in vielen Fällen aus dem Kunststoff Acrylnitril/Butadien/Styrol (ABS) besteht. Die Verklebung dieser unterschiedlichen Materialien stellt ebenfalls besondere Anforderungen an den Kleber.

Die EP 942 059 A beschreibt einen wärmeleitenden und druckempfindlichen Klebstoff, der a) ein Copolymer einer Monomermischung, die Hauptmonomere auf Alkyl(meth)acrylatbasis enthält, sowie b) einen wärmeleitenden Füllstoff enthält, sowie Klebefolien, die mit einer Schicht eines derartigen wärmeleitenden und druckfähigen Klebstoffs ausgerüstet sind.

Die DE 199 54 960 A offenbart einen magnetische Nanopartikel enthaltenden Klebstoff auf Basis organischer Polymere sowie ein Verfahren zur Herstellung derartiger Klebstoffe.

In der JP 2001207143 A werden elektrisch leitfähige Klebstoffzusammensetzungen beschrieben, die ein Acrylonitril-Butadien-Copolymer umfassen, weiterhin ein Phenolharz, ein elektrisch leitendes Füllermaterial sowie ein Tetrabisphenol-A-Derivat. Klebefpolien auf Basis derartiger Klebemassen werden zur Verklebung von gedruckten Leiterplatten verwendet.

Die DE 102 10 662 A (Art. 54(3) EPÜ) beschreibt eine Klebstoffzusammensetzung zur Herstellung von Duromeren, die mittels eines elektrischen Feldes, magnetischen Feldes, elektromagnetischen Feldes, elektrischen Wechselfeldes, magnetischen Wechselfeldes oder elektromagnetischen Wechselfeldes erwärmbar ist, enthaltend ein Polymer, ein Polymergemisch oder ein Reaktionsharz, und Vemetzerpartikel, wobei die Vernetzerpartikel aus Füllstoffpartikeln, die metallisch, ferromagnetisch, ferrimagnetisch, superparamagnetisch oder paramagnetisch sind, und an diese Füllstoffpartikel chemisch gebundenen Vemetzereinheiten bestehen.

Für eine Vereinfachung des Herstellprozesses von beheizbaren Spiegeln besteht somit der Bedarf für eine beheizbare Haftklebemasse oder ein beheizbares Haftklebeband, welches die Trägerplatte mit dem Spiegel verklebt und zudem durch elektrischen Strom beheizbar ist.

Gelöst wird die Aufgabe überraschend und für den Fachmann in nicht vorhersehbarer Weise durch eine elektrisch erwärmbare Haftklebemasse, umfassend

(a) mindestens eine Klebstoffkomponente und
(b) mindestens ein elektrisch leitfähiges Füllmaterial.

Das Füllmaterial ist Leitruß.

Die UnteransprOche betreffen bevorzugte Weiterentwicklungen dieser Haftklebemassen.

Haftklebemassen

Ein wichtiger Bestandteil der erfinderischen Haftklebemasse ist der Zusatz mindestens eines elektrisch leitfähigen Füllmaterials, welches unter Strombeaufschlagung Wärme entwickelt. Hierfür wird erfindungsgemäß Leitruß (beispielsweise Printex® XE der Fa. Degussa) eingesetzt. Die Ausprägung des Effektes der elektrischen Erwärmbarkeit der Haftklebemasse kann durch den Füllgrad, das heißt den Massenanteil des Füllmaterials in der Haftklebemasse, bestimmt werden. Der Füllgrad sollte zwischen 3 und 20 Gew.-% betragen. In einer bevorzugten Auslegung - werden zwischen 8 und 12 Gew.-% Füllmaterial eingesetzt. Die Leitfähigkeit und somit auch die erzielbare Temperatur ist abhängig vom Füllgrad. Durch Anhebung des Füllgrades lassen sich höhere Leitfähigkeit und somit auch höhere Temperaturen erreichen. Weiterhin ist die elektrische Leitfähigkeit und somit die Erwärmbarkeit der Haftklebemasse auch vom Basispolymer der Klebstoffkomponente abhängig.

Als Klebstoffkomponente der elektrisch beheizbaren Haftklebemassen können alle Haftklebemassen mit geeigneten haftklebenden Eigenschaften eingesetzt werden. Die zur Herstellung der Klebstoffkomponente dienenden Monomere werden insbesondere dermaßen gewählt, dass die resultierenden Polymere bei Raumtemperatur oder höheren Temperaturen als Haftklebemassen eingesetzt werden können, vorzugsweise derart, dass die resultierenden Polymere haftklebende Eigenschaften entsprechend dem "Handbook of Pressure Sensitive Adhesive Technology" von Donatas Satas (van Nostrand, New York 1989) besitzen.

Zur Erzielung einer für Haftklebemassen bevorzugten Glasübergangstemperatur $T_G$ der Polymere von $T_G \leq 25$ °C werden entsprechend dem vorstehend

Gesagten die Monomere sehr bevorzugt derart ausgesucht und die mengenmäßige Zusammensetzung der Monomermischung vorteilhaft derart gewählt, dass sich nach der ***Fox***-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Es sind insbesondere Acrylathaftklebemassen als Klebstoffkomponente geeignet, welche etwa durch radikalische Polymerisation erhältlich sind und die zumindest teilweise auf mindestens einem Acrylmonomer der allgemeinen Formel (1) basieren,

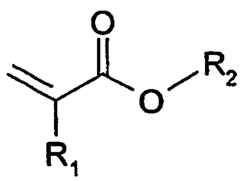

(1)

wobei $R_1$ gleich H oder ein $CH_3$-Rest ist und $R_2$ gleich H ist oder aus der Gruppe der gesättigten, unverzweigten oder verzweigten, substituierten oder nicht-substituierten $C_1$- bis $C_{30}$-Alkylresten gewählt ist. Das mindestens eine Acrylmonomer sollte einen Massenanteil von mindestens 50 % in der Haftklebemasse aufweisen.

Es lassen sich nach einer besonders vorteilhaften Ausgestaltung Polymere als Klebstoffkomponente einsetzen, die

(a1) zumindest teilweise auf mindestens einen Acrylmonomer der allgemeinen Formel $CH_2=C(R_1)(COOR_2)$ basieren, wobei $R_1$ gleich H oder ein $CH_3$-Rest ist und $R_2$ aus der Gruppe der gesättigten, unverzweigten oder verzweigten, substituierten oder nicht-substituierten $C_2$- bis $C_{20}$-Alkylresten gewählt ist, und

(a2) zumindest teilweise auf einen mit dem mindestens einen Acrylmonomer polymerisierbaren Comonomer basieren, welches insbesondere aus Vinylverbindungen mit funktionellen Gruppen, Maleinsäureanhydrid, Styrol, Styrol-Verbindungen, Vinylacetat, Acrylamiden, mit Doppelbindung funktionalisierten Photoinitiatoren gewählt werden kann.

Dabei weist vorzugsweise das mindestens eine Acrylmonomer einen Massenanteil von 65 bis 100 Gew.-% und das mindestens eine Comonomer einen Massenanteil von 0 bis 35 Gew.-% in der Klebstoffkomponente auf.

Es hat sich ferner eine mittlere molekulare Masse $M_w$ der Klebstoffkomponente von maximal 500.000 g/mol hinsichtlich der gewünschten mechanischen Eigenschaften der Haftklebemasse als vorteilhaft erwiesen.

Die mindestens eine Klebstoffkomponente kann nach einer weiteren Ausführung auch Natur- oder Synthesekautschukmassen umfassen oder auf solchen basieren. Für Klebstoffkomponenten aus Naturkautschuk wird dieser bis zu einem frei wählbaren Molekulargewicht gemahlen und dann mit dem elektrisch leitfähigen Füllstoff additiviert.

In einer sehr bevorzugten Weise werden Acryl- oder Methacrylmonomere der allgemeinen Formel (1) eingesetzt, die Acryl- und Methacrylsäureester umfassen, wobei die Gruppe $R_2$ aus der Gruppe der gesättigten, unverzweigten oder verzweigten, substituierten oder nicht-substituierten $C_4$- bis $C_{14}$-Alkylresten, insbesondere $C_4$- bis $C_9$-Alkylresten, gewählt ist. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, beipielsweise Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate der allgemeinen Formel (1), wobei der Rest $R_2$ aus der Gruppe der überbrückten oder nicht-überbrückten Cycloalkylresten mit mindestens 6 C-Atomen gewählt ist. Die Cycloalkylreste können auch substituiert sein, beispielsweise durch $C_1$- bis $C_6$-Alkylgruppen, Halogenatomen oder Cyanogruppen. Spezifische Beispiele sind Cyclohexylmethacrylat, Isobornylacrylat, Isobornylmethacrylat und 3,5-Dimethyladamantylacrylat.

In einer Vorgehensweise werden Acrylmonomere und/oder Comonomere eingesetzt, die einen oder mehrere, insbesondere polare Substituenten aufweisen, beispielsweise Carboxyl-, Sulfonsäure-, Phosphonsäure-, Hydroxyl-, Lactam-, Lacton-, N-substituierte Amid-, N-substituierte Amin-, Carbamat-, Epoxy-, Thiol-, Alkoxy-, Cyan-, Halogenid- und Ethergruppen.

Es sind ebenfalls moderat basische Comonomere geeignet, wie einfach oder zweifach N-alkylsubstituierte Amide, insbesondere Acrylamide. Spezifische Beispiele sind hier N,N-Dimethylacrylamid, N,N-Dimethylmethacrylamid, N-tert-Butylacrylamid, N-Vinylpyrrolidon, N-Vinyllactam, Dimethylaminoethylacrylat, Dimethylaminoethylmethacrylat, Diethylaminoethylacrylat, Diethylaminoethylmethacrylat, N-Methylolacrylamid, N-Methylolmethacrylamid, N-(Butoxymethyl)methacrylamid, N-(Ethoxymethyl)acrylamid, N-Isopropylacrylamid, wobei diese Aufzählung nicht abschließend ist.

Weitere bevorzugte Beispiele für Comonomere sind Hydroxyethylacrylat, Hydroxyethylmethacrylat, Hydroxypropylacrylat, Hydroxypropylmethacrylat, Allylalkohol, Maleinsäureanhydrid, Itaconsäureanhydrid, Itaconsäure, Glyceridylmethacrylat, Phenoxyethylacrylat, Phenoxyethylmethacrylat, 2-Butoxyethylacrylat, 2-Butoxyethylmethacrylat, Cyanoethylacrylat, Cyanoethylmethacrylat, Glycerylmethacrylat, 6-Hydroxyhexylmethacrylat, Vinylessigsäure, Tetrahydrofurfurylacrylat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Vorgehensweise werden als Comonomere Vinylverbindungen, insbesondere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt, wie Vinylacetat, Vinylformamid, Vinylpyridin, Ethylvinylether, Vinylchlorid, Vinylidenchlorid, Styrol und Acrylonitril.

Besonders vorteilhaft kann das mindestens eine Comonomer ein Photoinitiator mit einer copolymerisierbaren Doppelbindung sein, insbesondere ausgewählt aus der Gruppe enthaltend Norrish-I- oder Norrish-II-Photoinitiatoren, Benzoinacrylate oder acrylierte Benzophenone.

In einer weiteren bevorzugten Vorgehensweise werden zu den beschriebenen Comonomeren Monomere hinzugesetzt, die eine hohe statische Glasübergangstemperatur besitzen. Als Komponenten eigenen sich aromatische Vinylverbindungen, wie z. B. Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-L,imetho;,ystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Zur Optimierung der klebtechnischen Eigenschaften können den erfinderischen Haftklebemassen Harze beigemischt werden. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$- bis $C_9$- sowie andere Kohlenwasserstoffharze. Beliebige Kombinationen dieser und weiterer Harze können eingesetzt werden, um die Eigenschaften der resultierenden Klebmasse wunschgemäß einzustellen. Im Allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen. In einer bevorzugten Auslegung werden Harze eingesetzt, die die elektrische Leitfähigkeit und die Erwärmbarkeit - auch über einen längeren Zeitraum - nicht vermindern.

Ein weiterer Bestandteil der Erfindung ist die Vernetzung der erfinderischen Haftklebemassen, wobei hohe Vernetzungsgrade angestrebt werden. Nach einer bevorzugten Ausgestaltung der Erfindung weist die mindestens eine Klebstoffkomponente einen Vernetzungsgrad auf, der mindestens einem Gelwert von 35 %, insbesondere von mindestens 60 % entspricht. Dabei wird vorliegend als Gelwert das Verhältnis von nicht in Toluol löslicher Klebstoffkomponente zu löslicher Klebstoffkomponente definiert. In einer bevorzugten Auslegung der Erfindung werden die Haftklebemassen mit Elektronenstrahlen vernetzt. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Standes der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Typische Beschleunigungsspannungen liegen im Bereich zwischen 50 und 500 kV, vorzugsweise im Bereich zwischen 80 und 300 kV. Die angewandten Streudosen bewegen sich zwischen 5 bis 150 kGy, insbesondere zwischen 20 und 100 kGy. Es können auch andere Verfahren eingesetzt werden, die hochenergetische Bestrahlung ermöglichen.

Weiterhin ist Bestandteil der Erfindung die Variation der elektrischen Leitfähigkeit und somit der thermischen Erwärmung über den Vernetzungsgrad. Durch Erhöhung der ES-Dosis (und damit auch des Vernetzungsgrades) lässt sich die elektrische Leitfähigkeit erhöhen und bei gleichem Strom erhöht sich die Temperatur der Haftklebemasse.

Zur Verringerung der erforderlichen Dosis können der Haftklebemasse Vernetzer und/oder Promotoren zur Vernetzung beigemischt werden, insbesondere durch Elektronenstrahlen oder thermisch anregbare Vernetzer und/oder Promotoren. Geeignete Vernetzer für die Elektronenstrahlvernetzung sind bi- oder multifunktionelle Acrylate oder Methacrylate. In einer weiteren bevorzugten Auslegung werden die Haftklebemassen mit thermisch aktivierbaren Vernetzern vernetzt. Hierzu werden bevorzugt Metallchelate, bi- oder multifunktionelle Epoxide, bi- oder multifunktionelle Hydroxide sowie bi-

oder multifunktionelle Isocyanate beigemischt.

Weiterhin können der Haftklebemasse optional Weichmacher (Plastifizierungsmittel) und/oder weitere Füllstoffe zugesetzt sein.

Herstellverfahren für die Haftklebemassen

Die Erfindung betrifft ferner ein Verfahren zur Herstellung der elektrisch erwärmbaren Haftklebemasse, wobei

(a) mindestens eine Klebstoffkomponente durch zumindest teilweise in Lösung oder in Substanz durchführbare Polymerisation mindestens eines Monomers, gegebenenfalls in Gegenwart mindestens eines Comonomers, hergestellt wird und

(b) mindestens ein elektrisch leitfähiges Füllmaterial Klebstoffkomponente vor der Polymerisation dem mindestens einen Monomer und gegebenenfalls dem mindestens einem Copolymer zugemengt wird oder nach der Polymerisation der mindestens einen Klebstoffkomponente zugemengt wird.

Zur Herstellung insbesondere der Poly(meth) acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Ditertbutylperoxid, Azodüsosäurebutyronitril, Cyclohexylsulfonylacetylperoxid, Düsopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) oder Azodisobutyronitril (AIBN) verwendet.

Die elektrisch-leitfähigen Füllmaterialien können den Monomeren vor der Polymerisation und/oder nach Beendigung der Polymerisation beigemischt werden. Vorzugsweise wird das Füllmaterial nach der Polymerisation zu einer Schmelze der mindestens einen Klebstoffkomponente kompoundiert.

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z. B. Hexan, Heptan, Octan, Isooctan), aromatische Kohlenwasserstoffe (z. B. Benzol, Toluol, Xylol), Ester (z. B. Essigsäureethylester, Essigsäurepropyl-, -butyl- oder -hexylester), halogenierte Kohlenwasserstoffe (z. B. Ghlorbenzol), Alkanole (z. B. Methanol, Ethanol, Ethylenglycol, Ethylenglycolmonomethylether) und Ether (z. B. Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Herstellung kann es auch von Vorteil sein, die Acrylathaftklebemassen in Substanz zu polymerisieren. Hier eignet sich insbesondere, die Präpolymerisationstechnik einzusetzen. Die Polymerisation wird mit UV-Licht initiiert, aber nur zu einem geringen Umsatz ca. 10 bis 30 % geführt. Anschließend kann dieser Polymersirup z. B. in Folien eingeschweißt werden (im einfachsten Fall Eiswürfel) und dann in Wasser zu hohem Umsatz durchpolymerisiert werden. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind. Auch für diese Präparationsmethode lassen sich die thermisch-leitfähigen Materialzusätze vor oder nach der Polymerisation zusetzen.

Ein anderes vorteilhaftes Herstellungsverfahren für die Poly(meth)acrylathaftklebemassen ist die anionische Polymerisation. Hier werden als Reaktionsmedium bevorzugt inerte Lösungsmittel verwendet, wie z. B. aliphatische und cycloaliphatische Kohlenwasserstoffe, oder auch aromatische Kohlenwasserstoffe.

Das lebende Polymer wird in diesem Fall im Allgemeinen durch die Struktur $P_L$(A)-Me repräsentiert,

wobei Me ein Metall der Gruppe I, wie z. B. Lithium, Natrium oder Kalium, und $P_L(A)$ ein wachsendes Polymer aus den Acrylatmonomeren ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z. B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Polyacrylathaftklebemassen mit einer engen Molekulargewichtsverteilung eignen sich auch kontrollierte radikalische Polymerisationsmethoden.

Herstellung von Haftklebebändern

Ein weiterer Aspekt der Erfindung betrifft die Verwendung der erfindungsgemäßen Haftklebemasse zur Herstellung von elektrisch erwärmbaren Haftklebebändern, die einen Film der erwärmbaren Haftklebemasse und eine elektrisch leitfähige Kontaktierung umfassen.

Geeignete Kontaktierungen sind Metallfolien, Metallnetze oder metallbeschichtete Kunststofffolien (Polymerfolien).

Im einfachsten Fall wird die erwärmbare Haftklebemasse mit einem elektrisch leitfähigen Metall kontaktiert. In bevorzugter Weise werden Metalle eingesetzt, die nicht oder nur wenig über längere Zeiträume korrodieren. In sehr bevorzugten Auslegungen wird beispielsweise Kupfer oder Aluminium eingesetzt, wobei aber auch Silber- oder Gold-Kontaktierungen vorgenommen werden können.

Mögliche Anordnungen solcher kontaktierten Haftklebebänder sind in den Figuren 1 bis 3 dargestellt. Gemäß Figur 1 ist die elektrisch erwärmbare Haftklebemasse 10 beidseitig und vollflächig mit einer Metallfolie 12, insbesondere einer Aluminiumfolie, kontaktiert. Nach Figur 2 ist die Haftklebemasse 10 auf einer Seite ebenfalls vollflächig mit einer Metallfolie 12 kontaktiert und auf der anderen Seite teilflächig mit einem Metallnetz 14. Schließlich zeigt Figur 3 einen Produktaufbau, in dem die Haftklebemasse 10 auf beiden Seiten mit einer metallisierten Kunststofffolie kontaktiert ist, wobei mit 16 jeweils die Kunststofffolie und mit 18 ihre Metallbeschichtung bezeichnet ist. Weitere Produktgestaltungen sind denkbar.

Der Haftklebefilm kann dabei voll- oder teilflächig, ein- oder doppelseitig mit der Kontaktierung verbunden sein. Die Kontaktierung kann beispielsweise punktförmig oder über eine beliebig wählbare Struktur, wie etwa bei der Verwendung von Metallnetzen, vorgenommen werden.

Ein weiterer Aspekt der Erfindung betrifft die Verwendung der erfindungsgemäßen Haftklebemasse zur Herstellung von elektrisch erwärmbaren Haftklebebändern, wobei ein Trägermaterial mit einer Lösung oder einer Schmelze (im so genannten Hotmelt-Verfahren) der erfindungsgemäßen Haftklebemasse beschichtet wird. Vorzugsweise handelt es sich bei dem Trägermaterial um eine von der Haftklebemasse abziehbare Kunststofffolie oder ein Trennpapier. Derartige Haftklebebänder eignen sich insbesondere auch zur Übertragung des Haftklebemassenfilms auf die oben genannte Kontaktierung.

Zur Herstellung der erfinderischen Haftklebebänder können die Haftklebemassen aus Lösung oder sehr bevorzugt als Hotmelt-Systeme (also aus der Schmelze) beschichtet werden. Für das Herstellungsverfahren kann es daher erforderlich sein, das Lösemittel von der Haftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt weniger als 1 %, mehr bevorzugt weniger als 0,5 % und sehr bevorzugt weniger als 0,2 %.

Für die Beschichtung aus der Schmelze als Hotmelt-System wird in einer bevorzugten Auslegung das elektrisch leitfähige Füllmaterial zu der Schmelze kompoundiert. Hierbei ist eine homogene Einarbeitung unbedingt erforderlich. Homogene Verteilungen des Füllmaterials in der Haftklebemasse werden bevorzugt durch Kompoundierung in Doppelschneckenextrudern oder Planetwalzenextrudern erreicht. Die Doppelschneckenextruder können gleich- oder gegenläufig betrieben werden.

Vorteil dieses Prozesses ist die nur sehr kurzfristige Kontaminierung des Herstellprozesses mit dem elektrisch leitfähigen Füllmaterial sowie die Vermeidung von Lösemitteln.

Nach der Kompoundierung wird bevorzugt der Hotmelt aus mit über eine Schmelzdüse oder über eine Extrusionsdüse oder über ein Walzenauftragswerk auf ein Trägermaterial beschichtet.

In einer sehr bevorzugten Ausführung werden

Transfer-Tapes hergestellt. Als Trägermaterial eignen sich z. B. alle silikonisierten oder fluorierten Folien mit einer Releasewirkung. Als Folienmaterialien seien hier nur beispielhaft BOPP, MOPP, PET, PVC, PUR, PE, PEIEVA, EPDM, PP und PE genannt. Weiterhin lassen sich für Transfertapes auch Trennpapiere (Glassine Papiere, Kraft Papiere, polyolefinisch beschichtete Papiere) einsetzen.

Experimente

Die Erfindung wird im Folgenden durch Experimente beschrieben, ohne sich durch die Wahl der untersuchten Proben unnötig beschränken zu weiten.

Folgende Testmethoden wurden angewendet.

Bestimmung des mittleren Molekulargewichtes (Test A)

Die Bestimmung des mittleren Molekulargewichtes $M_w$ und der Polydisperisität PD der Klebstoffkomponente erfolgte über die Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 μ, $10^3$Å, ID 8,0 mm x 50 mm verwendet. Zur Auftrennung wurden die Säulen PSS-SDV, 5 μ, $10^3$ sowie $10^5$ und $10^6$ Å mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

Messung der Erwärmbarkeit (Test B)

Zur Ermittlung der elektrischen Erwärmbarkeit des Materials als Maß für seine Leitfähigkeit wurde die Temperaturerhöhung nach elektrischer Spannungsbeaufschlagung gemessen. Die Messung der Temperatur erfolgte mit einem IR-Thermometer. Zur Kontaktierung wurde gemäß Figur 1 ein 50 μm dicker Film der erwärmbaren Haftklebemasse doppelseitig mit jeweils einer 25 x 25 mm großen und 50 μm dicken Al-Folie versehen (laminiert) und über diese Elektroden eine Spannung von 12 Volt über einen Transformator angelegt. Die obere Seite war positiv, die untere Seite negativ geladen. Die Temperatur wurde nach 30 Sekunden direkt auf der Oberfläche der Haftklebemasse gemessen und in °C angegeben.

1.80°-Klebkrafttest (Test C)

Zur Bestimmung der Klebkraft der Haftklebemassen wurde ein 20 mm breiter Streifen einer auf Polyester oder silikonisiertem Trennpapier gecoateten Haftklebemasse auf Stahlplatten aufgebracht. Es wurden - je nach Richtung und Reckung - Längs- oder Quermuster auf der Stahlplatte verklebt. Der Haftklebestreifen wurde zweimal mit einem 2 kg Gewicht auf das Substrat aufgedrückt. Das Klebeband wurde anschließend sofort mit 30 mm/min und im 180°-Winkel vom Substrat abgezogen. Die Stahlplatten wurden zuvor zweimal mit Aceton und einmal mit Isopropanol gewaschen. Die Messergebnisse sind in N/cm angegeben und sind gemittelt aus drei Messungen. Alle Messungen wurden bei Raumtemperatur unter klimatisierten Bedingungen durchgeführt.

Bestimmung des Gelwerts (Test D)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert, also der nicht in Toluol lösliche Gewichtsanteil des Polymers bestimmt.

Herstellung der Proben

Klebstoffkomponente 1

Ein für radikalische Polymerisationen konventioneller 200 L-Reaktor wurde mit 24 kg Acrylamid, 64 kg 2-Ethylhexylacrylat, 6,4 kg N-Isopropylacrylamid und 53,3 kg Aceton/Isopropanol (85:15) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 und 10 h wurde mit jeweils 15 kg Aceton/Isopropanol (85:15) verdünnt. Nach 6 und 8h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt.

Die Bestimmung des Molekulargewichtes nach Test A ergab ein $M_w$ = 341.000 g/mol bei einer Polydispersität $M_w/M_n$ = 5,9.

Klebstoffkomponente 2

Ein für radikalische Polymerisationen konventioneller 200 L-Reaktor wurde mit 12 kg Acrylamid, 74 kg 2-Ethylhexylacrylat, 4,8 kg N-Isopropylacrylamid und 53,3 kg Aceton/Isopropanol (87:13) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 und 10 h wurde mit jeweils 15 kg Aceton/Isopropanol (87:13) verdünnt. Nach 6 und 8h wurden jeweils 100g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur

abgekühlt.

Die Bestimmung des Molekulargewichtes nach Test A ergab ein $M_w$ = 408.000 g/mol bei einer Polydispersität $M_W/M_n$ = 5,8.

**Beispiel 1:**

Klebstoffkomponente 1 wurde mit 8 Gew.-% Leitruß (Printex XE, Fa. Degussa) in Lösung abgemischt und anschließend über einen Streichbalken auf ein silikonisiertes Glassine Trennpapier der Fa. Laufenberg beschichtet. Nach Trocknen für 10 Minuten bei 120 °C betrug die Dicke der Haftklebemassenschicht 50 µm.

Diese Haftklebemasse wurde anschließend durch Elektronenbestrahlung vernetzt. Die Elektronenbestrahlung erfolgte mit einem Gerät der Fa. Electron Crosslinking AB, Halmstad, Schweden. Das beschichtete Haftklebeband wurde dabei über eine standardmäßig vorhandene Kühlwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug 10 m/min. Die ES-Dosis bei Beispiel 1 betrug 50 kGray bei einer Beschleunigungsspannung von 180 kV.

**Beispiel 2:**

Klebstoffkomponente 1 wurde mit 12 Gew.-% Leitruß (Printex XE, Fa. Degussa) in Lösung abgemischt und anschließend über einen Streichbalken auf ein silikonisiertes Glassine Trennpapier der Fa. Laufenberg beschichtet. Nach Trocknen für 10 Minuten bei 120 °C betrug die Dicke der Haftklebemassenschicht 50 µm.

Die Haftklebemasse wurde anschließend gemäß Beispiel 1 durch Elektronenbestrahlung vernetzt. Die ES-Dosis bei Beispiel 2 betrug 50 kGray bei einer Beschleunigungsspannung von 180 kV.

**Beispiel 3:**

Klebstoffkomponente 2 wurde mit 12 Gew.-% Leitruß (Printex XE, Fa. Degussa) in Lösung abgemischt und anschließend über einen Streichbalken auf ein silikonisiertes Glassine Trennpapier der Fa. Laufenberg beschichtet. Nach Trocknen für 10 Minuten bei 120 °C betrug die Dicke der Haftklebemassenschicht 50 µm.

Die Haftklebemasse wurde anschließend gemäß Beispiel 1 durch Elektronenbestrahlung vernetzt. Die ES-Dosis bei Beispiel 3 betrug 50 kGray bei einer Beschleunigungsspannung von 180 kV.

**Beispiel 4:**

Klebstoffkomponente 1 wurde mit 12 Gew.-% Leitruß (Printex XE, Fa. Degussa) in Lösung abgemischt und anschließend über einen Streichbalken auf ein silikonisiertes Glassine Trennpapier der Fa. Laufenberg beschichtet. Nach Trocknen für 10 Minuten bei 120 °C betrug die Dicke der Haftklebemassenschicht 50 µm.

Die Haftklebemasse wurde anschließend gemäß Beispiel 1 durch Elektronenbestrahlung vernetzt. Die ES-Dosis bei Beispiel 4 betrug 30 kGray bei einer Beschleunigungsspannung von 180 kV.

**Beispiel 5:**

Klebstoffkomponente 1 wurde mit 12 Gew.-% Leitruß (Printex XE, Fa. Degussa) in Lösung abgemischt und anschließend über einen Streichbalken auf ein silikonisiertes Glassine Trennpapier der Fa. Laufenberg beschichtet. Nach Trocknen für 10 Minuten bei 120 °C betrug die Dicke der Haftklebemassenschicht 50 µm.

Die Haftklebemasse wurde anschließend gemäß Beispiel 1 durch Elektronenbestrahlung vernetzt. Die ES-Dosis bei Beispiel 5 betrug 80 kGray bei einer Beschleunigungsspannung von 180 kV.

Resultate

Zur Bestimmung des Vernetzungsgrades der nach den Beispielen 1 bis 5 hergestellten Haftklebemassen wurde der Gelwert nach der Elektronenstrahlvernetzung mit Test D ermittelt. Die gemessenen Werte sind in Tabelle 1 aufgelistet.

Tabelle 1: Gelwerte nach Test D.

| Beispiel | Gelwert in % (Test D) |
|---|---|
| 1 | 62 |
| 2 | 61 |
| 3 | 63 |
| 4 | 35 |
| 5 | 76 |

Erwartungsgemäß weist die Probe nach Beispiel 5, die mit der höchsten Dosis bestrahlt wurde, den höchsten Vernetzungsgrad und die mit der niedrigsten Dosis bestrahlte Probe 4 den geringsten Vernetzungsgrad auf.

Zur Ermittlung der elektrischen Erwärmbarkeit wurden die erfindungsgemäßen Haftklebemassen dem Test B unterzogen, wobei die Endtemperaturen nach Anlegen einer definierten Spannung gemessen wurde. Die Ergebnisse sind in Tabelle 2 dargestellt.

Tabelle 2: Elektrisch induzierte Temperaturen nach Test B.

| Beispiel | Temperatur in °C (Test B) |
|---|---|
| 1 | 46 |
| 2 | 56 |

(fortgesetzt)

| Beispiel | Temperatur in °C (Test B) |
|---|---|
| 3 | 55 |
| 4 | 50 |
| 5 | 61 |

Alle Beispiele weisen ein ausgeprägtes elektrisch induziertes Aufheizverhalten auf. Ein Vergleich der Beispiele 1 und 2 belegt, dass mit Erhöhung des Füllgrades, das heißt des Massenanteils des Leitrußes in den Proben, eine ausgeprägtere Erwärmung erzielt werden kann. Beispiel 3 belegt, dass auch Haftklebemassen mit unterschiedlichen Zusammensetzungen hinsichtlich der einzelnen Monomerenanteile eingesetzt werden können. Die Proben der Beispiele 4 und 5, die sich durch die Bestrahlungsdosen und damit die Vernetzungsgrade unterscheiden, zeigen ein unterschiedliches Enroärmungsverhalten. Insbesondere wird ersichtlich, dass ein hoher Vernetzungsgrad (Beispiel 5) besonders vorteilhafte Erwärmbarkeiten bewirkt.

In Verbindung mit Tabelle 1 belegen die für die Beispiele 2, 4 und 5 gemessenen Temperaturwerte die Korrelation zwischen Strahlungsdosis, Vernetzungsgrad und Erwärmbarkeit. Es zeigt sich, dass mit steigender Dosis der Gelwert und somit der Vernetzungsgrad ansteigt und mit steigendem Vernetzungsgrad die Proben auch eine steigende Erwärmungstemperatur aufweisen. Somit lässt sich die elektrische Erwärmbarkeit einerseits mit zunehmendem Füllgrad des elektrisch leitenden Füllmaterials und andererseits auch durch den Vernetzungsgrad steuern.

Um zu belegen, dass die nach den oben genannten Beispielen 1 bis 5 hergestellten Haftklebemassen auch gute haftklebende Eigenschaften aufweisen, wurden von allen Proben die Sofortklebkraft auf Stahl ermittelt (s. Test C). Die Messwerte sind in Tabelle 3 zusammengefasst.

Tabelle 3: Sofortklebkräfte auf Stahl nach Test C.

| Beispiel | Klebkraft auf Stahl (Test C) in [N/cm] |
|---|---|
| 1 | 3,6 |
| 2 | 3,4 |
| 3 | 3,2 |
| 4 | 4,2 |
| 5 | 2,8 |

Die in Tabelle 3 aufgezeigten Werte verdeutlichen, dass die Beispiele 1 bis 5 gute haftklebrige Eigenschaften aufweisen. Durch die Mengen des Füllmaterialzusatzes, durch die Monomer/Comonomer-Zusammensetzung sowie durch den Vernetzungsgrad lässt sich die Klebkraft steuern. Durch hohe Anteile des Füllmaterials sinkt die Klebkraft ab.

**Bezugszeichen**

10 Haftklebemasse
12 Metallfolie
14 Metallnetz
16 Kunststofffolie
18 Metallschicht

**Patentansprüche**

1. Elektrisch erwärmbare Haftklebemasse, umfassend

   (a) mindestens eine Klebstoffkomponente und
   (b) mindestens ein elektrisch leitfähiges Füllmaterial,

   **dadurch gekennzeichnet, dass**
   das mindestens eine elektrisch leitfähige Füllmaterial Leitruß ist.

2. Haftklebemasse nach Anspruch 1, **dadurch gekennzeichnet, dass** das mindestens eine elektrisch leitfähige Füllmaterial einen Massenanteil von 3 bis 20 Gew.-% in der Haftklebemasse aufweist.

3. Haftklebemasse nach einem der vorhergehenden Ansprüche, **dadurch gekennzeichnet, dass** die mindestens eine Klebstoffkomponente zumindest teilweise auf mindestens einem Acrylmonomer der allgemeinen Formel (1) basiert,

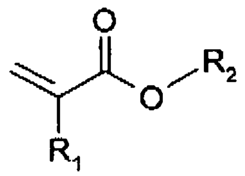

(1)

wobei $R_1$ gleich H oder ein $CH_3$-Rest ist und $R_2$ gleich H ist oder aus der Gruppe der gesättigten, unverzweigten oder verzweigten, substituierten oder nicht-substituierten $C_1$- bis $C_{30}$-Alkylresten gewählt ist, und das mindestens eine Acrylmonomer einen Massenanteil von mindestens 50 % in der Haftklebemasse aufweist.

4. Haftklebemasse nach Anspruch 3, **dadurch gekennzeichnet, dass** die mindestens eine Klebstoffkomponente

(a1) zumindest teilweise auf mindestens einen Acrylmonomer der allgemeinen Formel (1) basiert, wobei $R_1$ gleich H oder ein $CH_3$-Rest ist und $R_2$ aus der Gruppe der gesättigten, unverzweigten oder verzweigten, substituierten oder nicht-substituierten $C_2$- bis $C_{20}$-Alkylresten gewählt ist, und

(a2) zumindest teilweise auf einen mit dem mindestens einen Acrylmonomer polymerisierbaren Comonomer basiert.

**5.** Haftklebemasse nach Anspruch 4, **dadurch gekennzeichnet, dass** das mindestens eine Acrylmonomer einen Massenanteil von 65 bis 100 Gew.-% und das mindestens eine Comonomer einen Massenanteil von 0 bis 35 Gew.-% in der Klebstoffkomponente aufweist.

**6.** Haftklebemasse nach einem der vorhergehenden Ansprüche, **dadurch gekennzeichnet, dass** die mindestens eine Klebstoffkomponente eine mittlere molekulare Masse $M_w$ von höchstens 500.000 g/mol aufweist.

**7.** Haftklebemasse nach einem der Ansprüche 3 bis 6, **dadurch gekennzeichnet, dass** die Gruppe $R_2$ der allgemeinen Formel (1) aus der Gruppe der gesättigten, unverzweigten oder verzweigten, substituierten oder nicht-substituierten $C_4$- bis $C_{14}$-Alkylresten gewählt ist.

**8.** Haftklebemasse nach einem der Ansprüche 3 bis 7, **dadurch gekennzeichnet, dass** die Gruppe $R_2$ der allgemeinen Formel (1) aus der Gruppe der überbrückten oder nicht-überbrückten, substituierten oder nicht-substituierten Cycloalkylresten mit mindestens 6 C-Atomen gewählt ist.

**9.** Haftklebemasse nach einem der Ansprüche 3 bis 8, **dadurch gekennzeichnet, dass** die Gruppe $R_2$ der allgemeinen Formel (1) und/oder das mindestens eine Comonomer einen oder mehrere Substituenten aufweist, ausgewählt aus der Gruppe, enthaltend Carboxyl-, Sulfonsäure-, Phosphonsäure-, Hydroxyl-, Lactam-, Lacton-, N-substituierte Amid-, N-substituierte Amin-, Carbamat-, Epoxy-, Thiol-, Alkoxy-, Cyan-, Halogenid- und Etherreste.

**10.** Haftklebemasse nach einem der Ansprüche 3 bis 9, **dadurch gekennzeichnet, dass** das mindestens eine Acrylmonomer der allgemeinen Formel (1) eine aus der folgenden Gruppe ausgewählte, substituierte oder nicht-substituierte Verbindung ist, umfassend Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, Isobutylacrylat, 2-Ethylhexylacrylat, 2-Ethylhexylmethacrylat, Isooctylacrylat, Isooctylmethacrylat, Cyclohexylmethacrylat, Isobornylacrylat, Isobornylmethacrylat, und 3,5-Dimethyladamantylacrylat.

**11.** Haftklebemasse nach einem der Ansprüche 4 bis 10, **dadurch gekennzeichnet, dass** das mindestens eine Comonomer ein N-alkylsubstituiertes Amid ist.

**12.** Haftklebemasse nach einem der Ansprüche 4 bis 10, **dadurch gekennzeichnet, dass** das mindestens eine Comonomer eine Verbindung ist, ausgewählt aus der Gruppe, enthaltend Hydroxyethylacrylat, Hydroxyethylmethacrylat, Hydroxypropylacrylat, Hydroxypropylmethacrylat. Allylalkohol, Maleinsäureanhydrid, Itaconsäureanhydrid, Itaconsäure, Glyceridylmethacrylat, Phenoxyethylacrylat, Phenoxyethylmethacrylat, 2-Butoxyethylacrylat, 2-Butoxyethylmethacrylat, Cyanoethylacrylat, Cyanoethylmethacrylat, Glycerylmethacrylat, 6-Hydroxyhexylmethacrylat, Vinylessigsäure, Tetrahydrofurfurylacrylat, β-Acryloyloxypropionsäure, Trichloracrylsäure, Fumarsäure, Crotonsäure, Aconitsäure und Dimethylacrylsäure.

**13.** Haftklebemasse nach einem der Ansprüche 4 bis 10, **dadurch gekennzeichnet, dass** das mindestens eine Comonomer eine Vinylverbindung ist, ausgewählt aus der Gruppe, enthaltend Vinylester, Vinylether, Vinylhalogenide, Vinylidenhalogenide, Vinylverbindungen mit aromatischen Cyclen oder Heterocyclen in a-Stellung.

**14.** Haftklebemasse nach einem der Ansprüche 4 bis 10, **dadurch gekennzeichnet, dass** das mindestens eine Comonomer ein Photoinitiator mit einer copolymerisierbaren Doppelbindung ist.

**15.** Haftklebemasse nach einem der vorhergehenden Ansprüche 4 bis 14, **dadurch gekennzeichnet, dass** das mindestens eine Comonomer mindestens eine Komponente mit einer hohen statischen Glasübergangstemperatur umfasst.

**16.** Haftklebemasse nach einem der Ansprüche 1 oder 2, **dadurch gekennzeichnet, dass** die mindestens eine Klebstoffkomponente eine Natur- oder Synthesekautschukmasse umfasst.

**17.** Haftklebemasse nach einem der vorhergehenden Ansprüche, **dadurch gekennzeichnet, dass** der Haftklebemasse mindestens eine Harz-Komponente zugesetzt ist, ausgewählt ist aus der Gruppe, enthaltend Pinen-, Inden- und Kolophoniumharze, oder deren Derivate oder Salze; aliphatische, aromatische oder alkylaromatische Kohlenwasserstoffharze.

**18.** Haftklebemasse nach einem der vorhergehenden Ansprüche, **dadurch gekennzeichnet, dass** der Haftklebemasse mindestens ein Vernetzer und/oder Promotor zugefügt ist.

**19.** Haftklebemasse nach einem der vorhergehenden Ansprüche, **dadurch gekennzeichnet, dass** die mindestens eine Klebstoffkomponente einen Vernetzungsgrad aufweist, der mindestens einem Gelwert von 35 % entspricht, wobei der Gelwert das Verhältnis von nicht in Toluol löslicher Klebstoffkomponente zu löslicher Klebstoffkomponente bezeichnet.

**20.** Haftklebemasse nach einem der vorhergehenden Ansprüche, **dadurch gekennzeichnet, dass** der Haftklebemasse Weichmacher und/oder weitere Füllstoffe zugesetzt sind.

**21.** Verfahren zur Herstellung einer elektrisch erwärmbaren Haftklebemasse nach einem der Ansprüche 1 bis 20, wobei

(a) mindestens eine Klebstoffkomponente durch zumindest teilweise Polymerisation mindestens eines Monomers, gegebenenfalls in Gegenwart mindestens eines Comonomers, hergestellt wird und
(b) mindestens ein elektrisch leitfähiges Füllmaterial Klebstoffkomponente vor der Polymerisation dem mindestens einen Monomer und gegebenenfalls dem mindestens einem Copolymer zugemengt wird oder nach der Polymerisation der mindestens einen Klebstoffkomponente zugemengt wird.

**22.** Verfahren nach Anspruch 21, **dadurch gekennzeichnet, dass** die Polymerisation in Lösung oder in Substanz durchgeführt wird.

**23.** Verfahren nach Anspruch 21 oder 22, **dadurch gekennzeichnet, dass** die Polymerisation in Gegenwart mindestens eines Vernetzers und/oder mindestens eines Promotors durchgeführt wird und nach der Polymerisation oder nach der Zumengung des elektrisch leitfähigen Füllmaterials eine Vernetzung durchgeführt wird.

**24.** Verfahren nach einem der Ansprüche 21 bis 23, **dadurch gekennzeichnet, dass** das mindestens eine elektrisch leitfähige Füllmaterial zu einer Schmelze der mindestens einen Klebstoffkomponente kompoundiert wird.

**25.** Verwendung einer elektrisch erwärmbaren Haftklebemasse nach einem der Ansprüche 1 bis 20 zur Herstellung eines elektrisch erwärmbaren Haftklebebands, umfassend einen Film einer Haftklebemasse nach einem der Ansprüche 1 bis 20 und eine elektrisch leitende Kontaktierung.

**26.** Verwendung nach Anspruch 25, **dadurch gekennzeichnet, dass** der Film der Haftklebemasse voll- oder teilflächig, ein- oder doppelseitig mit der Kontaktierung verbunden ist.

**27.** Verwendung nach Anspruch 25 oder 26, **dadurch gekennzeichnet, dass** die Kontaktierung eine Metallfolie, ein Metallnetz oder eine metallisierte Kunststofffolie ist.

**28.** Verwendung einer elektrisch erwärmbaren Haftklebemasse nach einem der Ansprüche 1 bis 20 zur Herstellung eines elektrisch erwärmbaren Haftklebebands, wobei ein Trägermaterial mit einer Lösung oder einer Schmelze der Haftklebemasse beschichtet wird.

**29.** Verwendung nach Anspruch 28, **dadurch gekennzeichnet, dass** als Trägermaterial eine von der Haftklebemasse abziehbare Kunststofffolie oder ein Trennpapier verwendet wird.

## Claims

**1.** Electrically heatable pressure-sensitive adhesive comprising

(a) at least one adhesive component and
(b) at least one electrically conductive filler material,

**characterized in that** the at least one electrically conductive filler material is conductive carbon black.

**2.** Pressure-sensitive adhesive according to Claim 1, **characterized in that** the at least one electrically conductive filler material has a mass fraction of 3% to 20% by weight in the pressure-sensitive adhesive.

**3.** Pressure-sensitive adhesive according to any one of the preceding claims, **characterized in that** the at least one adhesive component is based at least partly on at least one acrylic monomer of the general formula (1)

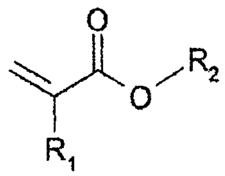

(1)

where $R_1$ is H or a $CH_3$ radical and $R_2$ is H or is

selected from the group of saturated, unbranched or branched, substituted or unsubstituted $C_1$ to $C_{30}$ alkyl radicals, and the at least one acrylic monomer has a mass fraction of at least 50% in the pressure-sensitive adhesive.

**4.** Pressure-sensitive adhesive according to Claim 3, **characterized in that** the at least one adhesive component

(a1) is based at least partly on at least one acrylic monomer of the general formula (1), where $R_1$ is H or a $CH_3$ radical and $R_2$ is selected from the group of saturated, unbranched or branched, substituted or unsubstituted $C_2$ to $C_{20}$ alkyl radicals, and
(a2) is based at least partly on a comonomer which is polymerizable with the at least one acrylic monomer.

**5.** Pressure-sensitive adhesive according to Claim 4, **characterized in that** the at least one acrylic monomer has a mass fraction of 65% to 100% by weight and the at least one comonomer has a mass fraction of 0 to 35% by weight in the adhesive component.

**6.** Pressure-sensitive adhesive according to any one of the preceding claims, **characterized in that** the at least one adhesive component has an average molecular mass $M_w$ of not more than 500 000 g/mol.

**7.** Pressure-sensitive adhesive according to any one of Claims 3 to 6, **characterized in that** the group $R_2$ of the general formula (1) is selected from the group of saturated, unbranched or branched, substituted or unsubstituted $C_4$ to $C_{14}$ alkyl radicals.

**8.** Pressure-sensitive adhesive according to any one of Claims 3 to 7, **characterized in that** the group $R_2$ of the general formula (1) is selected from the group of bridged or unbridged, substituted or unsubstituted cycloalkyl radicals having at least 6 carbon atoms.

**9.** Pressure-sensitive adhesive according to any one of Claims 3 to 8, **characterized in that** the group $R_2$ of the general formula (1) and/or the at least one comonomer has one or more substituents selected from the group containing carboxyl, sulfonic acid, phosphonic acid, hydroxyl, lactam, lactone, N-substituted amide, N-substituted amine, carbamate, epoxy, thiol, alkoxy, cyano, halide, and ether radicals.

**10.** Pressure-sensitive adhesive according to any one of Claims 3 to 9, **characterized in that** the at least one acrylic monomer of the general formula (1) is a substituted or unsubstituted compound selected from the following group, comprising methyl acrylate, methyl methacrylate, ethyl acrylate, n-butyl acrylate, n-butyl methacrylate, n-pentyl acrylate, n-hexyl acrylate, n-heptyl acrylate, n-octyl acrylate, n-octyl methacrylate, n-nonyl acrylate, lauryl acrylate, stearyl acrylate, behenyl acrylate, isobutyl acrylate, 2-ethylhexyl acrylate, 2-ethylhexyl methacrylate, isooctyl acrylate, isooctyl methacrylate, cyclohexyl methacrylate, isobornyl acrylate, isobornyl methacrylate, and 3,5-dimethyladamantyl acrylate.

**11.** Pressure-sensitive adhesive according to any one of Claims 4 to 10, **characterized in that** the at least one comonomer is an N-alkyl-substituted amide.

**12.** Pressure-sensitive adhesive according to any one of Claims 4 to 10, **characterized in that** the at least one comonomer is a compound selected from the group containing hydroxyethyl acrylate, hydroxyethyl methacrylate, hydroxypropyl acrylate, hydroxypropyl methacrylate, allyl alcohol, maleic anhydride, itaconic anhydride, itaconic acid, glyceridyl methacrylate, phenoxyethyl acrylate, phenoxyethyl methacrylate, 2-butoxyethyl acrylate, 2-butoxyethyl methacrylate, cyanoethyl acrylate, cyanoethyl methacrylate, glyceryl methacrylate, 6-hydroxyhexyl methacrylate, vinylacetic acid, tetrahydrofuryl acrylate, β-acryloyloxypropionic acid, trichloroacrylic acid, fumaric acid, crotonic acid, aconitic acid, and dimethylacrylic acid.

**13.** Pressure-sensitive adhesive according to any one of Claims 4 to 10, **characterized in that** the at least one comonomer is a vinyl compound selected from the group containing vinyl esters, vinyl ethers, vinyl halides, vinylidene halides, vinyl compounds having aromatic rings or heterocycles in α position.

**14.** Pressure-sensitive adhesive according to any one of Claims 4 to 10, **characterized in that** the at least one comonomer is a photoinitiator having a copolymerizable double bond.

**15.** Pressure-sensitive adhesive according to any one of Claims 4 to 14 above, **characterized in that** the at least one comonomer comprises at least one component having a high static glass transition temperature.

**16.** Pressure-sensitive adhesive according to any one of Claims 1 or 2, **characterized in that** the at least one adhesive component comprises a natural or synthetic rubber compound.

**17.** Pressure-sensitive adhesive according to any one of the preceding claims, **characterized in that** Pressure-sensitive adhesive according to has been admixed with at least one resin component selected

from the group containing pinene resins, indene resins, and rosins, or derivatives or salts thereof; aliphatic, aromatic or alkylaromatic hydrocarbon resins.

**18.** Pressure-sensitive adhesive according to any one of the preceding claims, **characterized in that** the pressure-sensitive adhesive is admixed with at least one crosslinker and/or promoter.

**19.** Pressure-sensitive adhesive according to any one of the preceding claims, **characterized in that** the at least one adhesive component has a degree of crosslinking which corresponds at least to a gel index of 35%, the gel index denoting the ratio of toluene-insoluble adhesive component to soluble adhesive component.

**20.** Pressure-sensitive adhesive according to any one of the preceding claims, **characterized in that** plasticizers and/or further fillers have been added to Pressure-sensitive adhesive according to.

**21.** Process for preparing an electrically heatable pressure-sensitive adhesive according to any one of Claims 1 to 20, where

(a) at least one adhesive component is prepared by means of at least partial polymerization of at least one monomer, in the presence if desired of at least one comonomer, and
(b) at least one electrically conductive filler material adhesive component is combined prior to polymerization with the at least one monomer and, if desired, with the at least one copolymer or is combined after the polymerization with the at least one adhesive component.

**22.** Process according to Claim 21, **characterized in that** the polymerization is carried out in solution or in bulk (without solvent).

**23.** Process according to Claim 21 or 22, **characterized in that** the polymerization is carried out in the presence of at least one crosslinker and/or at least one promoter and after the polymerization or after the combination of the electrically conductive filler material a crosslinking is carried out.

**24.** Process according to any one of Claims 21 to 23, **characterized in that** the at least one electrically conductive filler material is compounded to a melt of the at least one adhesive component.

**25.** Use of an electrically heatable pressure-sensitive adhesive according to any one of Claims 1 to 20 for producing an electrically heatable pressure-sensitive adhesive tape comprising a film of a pressure-sensitive adhesive according to any one of Claims 1 to 20 and an electrically conducting contacting means.

**26.** Use according to Claim 25, **characterized in that** the film of the pressure-sensitive adhesive is joined over the whole or part of its area, on one or both sides, to the contacting means.

**27.** Use according to Claim 25 or 26, **characterized in that** the contacting means is a metal foil, a metal mesh or a metallized polymeric film.

**28.** Use according to an electrically heatable pressure-sensitive adhesive according to any one of claims 1 to 20 for producing an electrically heatable pressure-sensitive adhesive tape, where a backing material is coated with a solution or melt of Pressure-sensitive adhesive according to.

**29.** Use according to Claim 28, **characterized in that** the backing material used is a polymeric film which can be peeled from the pressure-sensitive adhesive or a release paper.

**Revendications**

**1.** Masse autoadhésive pouvant être chauffée électriquement, comprenant

(a) au moins un composant adhésif et
(b) au moins un matériau de charge électriquement conductible, **caractérisée**

**en ce qu'**au moins un matériau de charge électriquement conductible est une suie conductible.

**2.** Masse autoadhésive selon la revendication 1, **caractérisée en ce que** ledit au moins un matériau de charge électriquement conductible présente une proportion en masse de 3 à 20 % en poids dans la masse autoadhésive.

**3.** Masse autoadhésive selon au moins l'une quelconque des revendications précédentes, **caractérisée en ce que** ledit au moins un composant adhésif est au moins partiellement à base d'au moins un monomère acrylique de formule générale (1),

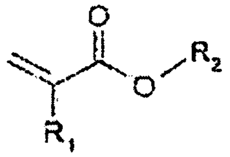

(1)

où $R_1$ représente H ou un radical $CH_3$ et $R_2$ représente H ou est choisi dans le groupe des radicaux alkyle en $C_1$ à $C_{30}$ saturés, non ramifiés ou ramifiés, substitués ou non substitués, et ledit au moins un monomère acrylique présente une proportion en masse d'au moins 50 % dans la masse autoadhésive.

**4.** Masse autoadhésive selon la revendication 3, **caractérisée en ce que** ledit au moins un composant adhésif

(a1) est au moins en partie à base d'au moins un monomère acrylique de formule générale (1), où $R_1$ représente H ou un radical $CH_3$ et $R_2$ est choisi dans le groupe des radicaux alkyle en $C_2$ à $C_{20}$ saturés, non ramifiés ou ramifiés, substitués ou non substitués, et
(a2) est au moins en partie à base d'un comonomère polymérisable avec ledit au moins un monomère acrylique.

**5.** Masse autoadhésive selon la revendication 4, **caractérisée en ce que** ledit au moins un monomère acrylique présente une proportion en masse de 65 à 100 % en poids et ledit au moins un comonomère représente une proportion en masse de 0 à 35 % en poids dans le composant adhésif.

**6.** Masse autoadhésive selon au moins l'une quelconque des revendications précédentes, **caractérisée en ce que** ledit au moins un composant adhésif présente une masse moléculaire moyenne $M_w$ d'au plus 500 000 g/mole.

**7.** Masse autoadhésive selon l'une quelconque des revendications 3 à 6, **caractérisée en ce que** le groupe $R_2$ de formule générale (1) est choisi dans le groupe des radicaux alkyle en $C_4$ à $C_{14}$ saturés, non ramifiés ou ramifiés, substitués ou non substitués.

**8.** Masse autoadhésive selon l'une quelconque des revendications 3 à 7, **caractérisée en ce que** le groupe $R_2$ de formule générale (1) est choisi dans le groupe des radicaux cycloalkyle comprenant au moins 6 atomes de carbone, pontés ou non pontés, substitués ou non substitués.

**9.** Masse autoadhésive selon l'une quelconque des revendications 3 à 8, **caractérisée en ce que** le groupe $R_2$ de formule générale (1) et/ou ledit au moins un comonomère présente un ou plusieurs substituants, choisis dans le groupe contenant des radicaux carboxyle, acide sulfonique, acide phosphonique, hydroxyle, lactame, lactone, amide N-substitué, amine N-substituée, carbamate, époxy, thiol, alcoxy, cyano, halogénure et éther.

**10.** Masse autoadhésive selon l'une quelconque des revendications 3 à 9, **caractérisée en ce que** ledit au moins un monomère acrylique de formule générale (1) est un composé, substitué ou non substitué, choisi dans le groupe suivant, comprenant l'acrylate de méthyle, le méthacrylate de méthyle, l'acrylate d'éthyle, l'acrylate de n-butyle, le méthacrylate de n-butyle, l'acrylate de n-pentyle, l'acrylate de n-hexyle, l'acrylate de n-heptyle, l'acrylate de n-octyle, le méthacrylate de n-octyle, l'acrylate de n-nonyle, l'acrylate de lauryle, l'acrylate de stéaryle, l'acrylate de béhényle, l'acrylate d'isobutyle, l'acrylate de 2-éthylhexyle, le méthacrylate de 2-éthylhexyle, l'acrylate d'isooctyle, le méthacrylate d'isooctyle, le méthacrylate de cyclohexyle, l'acrylate d'isobornyle, le méthacrylate d'isobornyle, et l'acrylate de 3,5-diméthyladamantyle.

**11.** Masse autoadhésive selon l'une quelconque des revendications 4 à 10, **caractérisée en ce que** ledit au moins un comonomère est un amide N-substitué par alkyle.

**12.** Masse autoadhésive selon l'une quelconque des revendications 4 à 10, **caractérisée en ce que** ledit au moins un comonomère est un composé choisi dans le groupe comprenant l'acrylate d'hydroxyéthyle, le méthacrylate d'hydroxyéthyle, l'acrylate d'hydroxypropyle, le méthacrylate d'hydroxypropyle, l'alcool allylique, l'anhydride de l'acide maléique, l'anhydride de l'acide itaconique, l'acide itaconique, le méthacrylate de glycéridyle, l'acrylate de phénoxyéthyle, le méthacrylate de phénoxyéthyle, l'acrylate de 2-butoxyéthyle, le méthacrylate de 2-butoxyéthyle, l'acrylate de cyanoéthyle, le méthacrylate de cyanoéthyle, le méthacrylate de glycéryle, le méthacrylate de 6-hydroxyhexyle, l'acide vinylacétique, l'acrylate de tétrahydrofurfuryle, l'acide β-acryloyloxypropionique, l'acide trichloroacrylique, l'acide fumarique, l'acide crotonique, l'acide aconitique et l'acide diméthylacrylique.

**13.** Masse autoadhésive selon l'une quelconque des revendications 4 à 10, **caractérisée en ce que** ledit au moins un comonomère est un composé de vinyle, choisi dans le groupe contenant les esters de vinyle, les vinyléthers, les halogénures de vinyle, les halogénures de vinylidène, les composés de vinyle avec des cycles ou des hétérocycles aromatiques en position $\alpha$.

**14.** Masse autoadhésive selon l'une quelconque des revendications 4 à 10, **caractérisée en ce que** ledit au moins un comonomère est un photo-initiateur avec une double liaison copolymérisable.

**15.** Masse autoadhésive selon l'une quelconque des revendications précédentes 4 à 14, **caractérisée en**

**ce que** ledit au moins un comonomère comprend au moins un composant présentant une température de transition vitreuse statique élevée.

**16.** Masse autoadhésive selon l'une quelconque des revendications 1 ou 2, **caractérisée en ce que** ledit au moins un composant adhésif comprend une masse de caoutchouc naturel ou de synthèse.

**17.** Masse autoadhésive selon l'une quelconque des revendications précédentes, **caractérisée en ce que** la masse autoadhésive est additionnée d'au moins un composant de type résine, choisi dans le groupe contenant les résines de pinène, d'indène et de colophonium ou leurs dérivés ou sels, les résines hydrocarbonées aliphatiques, aromatiques ou alkylaromatiques.

**18.** Masse autoadhésive selon l'une quelconque des revendications précédentes, **caractérisée en ce que** la masse autoadhésive est additionnée d'au moins un réticulant et/ou promoteur.

**19.** Masse autoadhésive selon l'une quelconque des revendications précédentes, **caractérisée en ce que** ledit au moins un composant adhésif présente un degré de réticulation qui correspond à au moins une valeur de gel de 35 %, la valeur de gel désignant le rapport de composant adhésif non soluble dans le toluène au composant adhésif soluble.

**20.** Masse autoadhésive selon l'une quelconque des revendications précédentes, **caractérisée en ce que** la masse autoadhésive est mélangée avec des plastifiants et/ou d'autres charges.

**21.** Procédé pour la production d'une masse autoadhésive pouvant être chauffée électriquement selon l'une quelconque des revendications 1 à 20, où

(a) au moins un composant adhésif est préparé par une polymérisation au moins partielle d'au moins un monomère, le cas échéant en présence d'au moins un comonomère et
(b) au moins un matériau de charge électriquement conductible est mélangé au composant adhésif avant la polymérisation dudit au moins un monomère et le cas échéant dudit au moins un copolymère ou après la polymérisation dudit au moins un composant adhésif.

**22.** Procédé selon la revendication 21, **caractérisé en ce que** la polymérisation est réalisée en solution ou en masse.

**23.** Procédé selon la revendication 21 ou 22, **caractérisé en ce que** la polymérisation est réalisée en présence d'au moins un réticulant et/ou d'au moins un promoteur et qu'une réticulation est réalisée après la polymérisation ou après le mélange du matériau de charge électriquement conductible.

**24.** Procédé selon l'une quelconque des revendications 21 à 23, **caractérisé en ce que** ledit au moins un matériau de charge électriquement conductible est compoundé dans une masse fondue dudit au moins un composant adhésif.

**25.** Utilisation d'une masse autoadhésive pouvant être chauffée électriquement selon l'une quelconque des revendications 1 à 20 pour la production d'une bande autoadhésive pouvant être chauffée électriquement, comprenant un film d'une masse autoadhésive selon l'une quelconque des revendications 1 à 20 et un contact électriquement conducteur.

**26.** Utilisation selon la revendication 25, **caractérisée en ce que** le film de la masse autoadhésive est assemblé avec le contact sur toute la surface ou sur une surface partielle, sur une face ou deux faces.

**27.** Utilisation selon la revendication 25 ou 26, **caractérisée en ce que** le contact est une feuille métallique, une toile métallique ou une feuille en matériau synthétique métallisée.

**28.** Utilisation d'une masse autoadhésive pouvant être chauffée électriquement selon l'une quelconque des revendications 1 à 20 pour la production d'une bande autoadhésive pouvant être chauffée électriquement, un matériau support étant revêtu d'une solution ou d'une masse fondue de la masse autoadhésive.

**29.** Utilisation selon la revendication 28, **caractérisée en ce qu'**on utilise comme matériau support une feuille en matériau synthétique pouvant être retirée de la masse autoadhésive ou un papier de séparation.

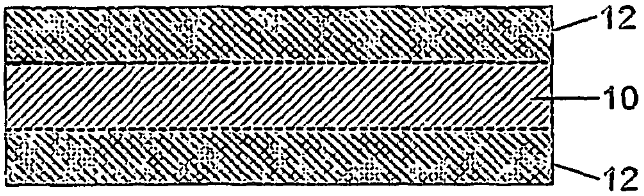


Fig. 1

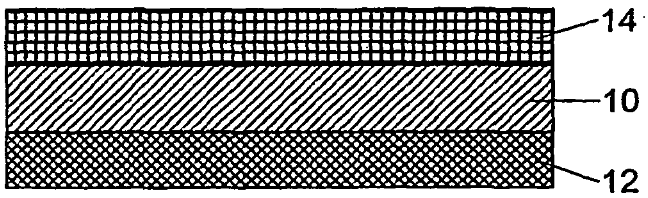


Fig. 2

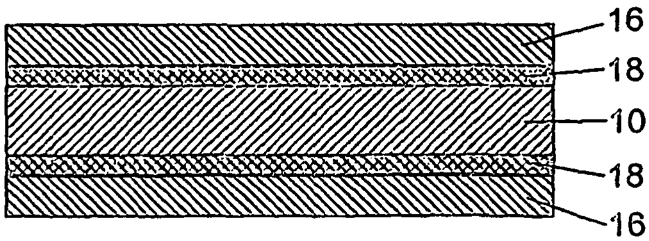


Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 942059 A
- DE 19954960 A
- JP 2001207143 A
- DE 10210662 A


### In der Beschreibung aufgeführte Nicht-Patentliteratur


- **T.G. FOX.** *Bull. Am. Phys. Soc.,* 1956, vol. 1, 123